# EUROPÄISCHE PATENTSCHRIFT

(11) **EP 0 778 919 B1**
(45) Veröffentlichungstag und Bekanntmachung des Hinweises auf die Patenterteilung: **22.07.1998**
(21) Anmeldenummer: 95929727.6
(22) Anmeldetag: 31.08.1995
(51) Int. Cl.: F02B 27/02

(54) **VARIABLE LUFTANSAUGVORRICHTUNG**
VARIABLE AIR INTAKE DEVICE
DISPOSITIF VARIABLE D'ASPIRATION D'AIR

(30) Priorität: 31.08.1994 DE 4431022
(43) Veröffentlichungstag der Anmeldung: 18.06.1997
(73) Patentinhaber: SIEMENS AKTIENGESELLSCHAFT, 80333 München (DE)
(72) Erfinder: ESPE, Carsten, D-93017 Thalmassing (DE); SCHEYTT, Mathias, D-93073 Neutraubling (DE)
(86) Internationale Anmeldenummer: DE9501172
(87) Internationale Veröffentlichungsnummer: WO9607022

(56) Entgegenhaltungen:
- DE-A- 4 041 786
- FR-A- 2 613 428

## Beschreibung

Die Erfindung betrifft eine variable Luftansaugvorrichtung für eine Brennkraftmaschine nach dem Oberbegriff von Patentanspruch 1.

Aus der FR-A-2 613 428 ist eine derartige Luftansaugvorrichtung bekannt mit einem ersten Sammler und Ansaugrohren, die von dem Sammler zu den Zylindern einer Brennkraftmaschine geführt sind. Diese Luftansaugvorrichtung weist weiterhin einen zweiten Sammler im Bereich der Luftansaugrohre auf, der durch die eng aneinander grenzenden Luftansaugrohre gebildet ist. Diese sind mit einer Bohrung versehen, in der eine koaxial zu der Bohrung verschiebbare Welle mit Scheiben gelagert ist, die in einer ersten Position der Welle die Bohrungen verschließt und die in einer zweiten Position der Welle sich zwischen den Bohrungen befindet.

Weiter ist eine Luftansaugvorrichtung bekannt, bei der jedes Saugrohr auf seinem Weg vom Sammler zum Zylinder der Brennkraftmschine einen Durchbruch aufweist, der über ein kurzes Rohrstück mit dem Sammler in Verbindung steht. In diesem Rohrstück ist eine Klappe angeordnet, die drehbar ist und je nach dem Betriebszustand der Brennkraftmaschine das Innnere des Rohrstücks verschließt oder öffnet. Aufgrund der gekrümmten Form der Saugrohre und der kurzen Rohrstücke ist ein bündiges Verschließen des Einmündungsbereichs mit dieser Klappe nicht möglich, das heißt, die Klappe muß etwas in das kurze Rohrstück zurückversetzt werden. Damit entsteht vor der Klappe in Richtung auf das dem Zylinder zugewandte Saugrohr bei geschlossener Klappe ein sogenanntes Totvolumen, das die Strömung der Ansaugluft nachteilig beeinflußt.

Die obigen bekannten Vorrichtungen verwenden gebogene Saugrohre, die sich leicht an die örtlichen Gegebenheiten im Motorraum anpassen lassen. Umschalteeinrichtungen in Form von verdrehbaren Verschlußteilen oder Verschiebeeinrichtungen erfordern aufgrund der gebogenen Form jedoch einen großen konstruktiven Aufwand.

Aus diesem Grund sind langgestreckte Luftansaugvorrichtungen bekannt geworden, durch die die geometrische Form derartiger Vorrichtungen vereinfacht werden konnte.

Durch die GB 22 10 665 ist eine Saugrohranlage mit einem Sammler und zu den einzelnen Zylindern führende Einzelsaugrohre bekannt, die aus jeweils einem langgestreckten inneren und äußeren Rohr bestehen, deren Verbindungsstellen an einem oder mehreren Zuschaltventilen befestigt sind, so daß ein Luftfluß zwischen den Verbindungsstellen bei Betätigung des Zuschaltventils ermöglicht wird. Dazu sind die Einzelsaugrohre in diesem Bereich um einen Hohlkörper herum angeordnet, der an seiner Peripherie Öffnungen aufweist, die mit einzelnen Öffnungen der Saugrohre in Verbindung stehen, wobei die Öffnungen durch eine im Hohlkörper angeordnete Muffe geöffnet oder geschlossen werden können. Im geschlossenen Zustand der Öffnungen bildet das Volumen im Hohlkörper ein nicht mit Ansaugluft durchströmtes Volumen, d.h., die darin befindliche Luft bewegt sich nicht, so daß beim Öffnen der Öffnungen diese stillstehende Luftmasse erst beschleunigt werden muß, um das Betriebsverhalten der Brennkraftmaschine zu beeinflussen. Außerdem wird durch eine derartige Vorrichtung wegen der Bereitstellung eines Hohlkörpers die Baugröße der Vorrichtung erhöht.

Ähnlich verhält es sich bei der durch die DE-A 40 17 049 bekannten Saugrohranlage. Auch hier wird im Bedarfsfall ein zusätzliches Luftvolumen über eine zusätzliche Rohrverbindung zugeschaltet, die nicht von der Verbrennungsluft durchströmt wird.

Die Aufgabe der Erfindung ist es, eine variable Luftansaugvorrichtung zu schaffen, bei der ein dichtes Verschließen von einander zugewandten Öffnungen in Luftansaugrohren gewährleistet ist und bei der zwei Längen der Luftansaugrohre mit durchgehender Strömung einfach einzustellen sind.

Die Aufgabe nach der Erfindung wird durch den Patentanspruch 1 gelöst. Vorteilhafte Weiterbildungen sind den Unteransprüchen entnehmbar.

Damit kann auf einfache Weise - ohne die Gesamtanordnung der Vorrichtung vergrößern zu müssen - bei einem Betriebszustand der Brennkraftmaschine, beispielsweise dann, wenn ein großes Drehmoment bei niedriger Drehzahl der Brennkraftmaschine gewünscht wird, die Luftansaugvorrichtung so eingestellt werden, daß die vor der Luftansaugvorrichtung befindlichen langen Luftansaugrohre voll zur Wirkung kommen. Bei einem anderen Betriebszustand, beispielsweise dann, wenn bei hohen Drehzahlen der Brennkraftmaschine eine hohe Leistung gefordert wird, werden Bereiche der Luftansaugrohre zu einem weiteren Sammler umfunktioniert, d.h. wirkungsmäßig zu kurzen Ansaugrohren, wobei der erste Sammler dann praktisch keinen Einfluß mehr ausübt, damit die Brennkraftmaschine die hohe Leistung erbringen kann.

Die Vorrichtung ist besonders raumsparend ausgebildet, da zumindest im Bereich des zweiten Sammlers die Luftansaugrohre eng benachbart zueinander angeordent sind, wobei die eng benachbarten Bereiche der Luftansaugrohre Öffnungen aufweisen, die jeweils durch Verschlußelemente der Schalteinrichtung verschlossen oder geöffnet werden können.

Durch jeweils einen Anlagebund im Umschaltbereich sowie durch die geometrische Form der Verschlußklappe wird die durch die Ansaugrohre strömende Luft, insbesondere in geschlossener Stellung der Verschlußelemente, praktisch nicht beeinflußt, so daß eine Wirbelbildung der Ansaugluft verhindert wird.

Bildet man die Verschlußelemente, wie im 2. Teil von Anspruch 1 definiert, als langgestreckte ovale Körper aus, insbesondere als zwei Flügel aufweisende ovale Klappen, so ist eine konstruktiv einfache, sichere Lagerung möglich.

Die Vorrichtung eignet sich besonders gut zur Umschaltung der Luftansaugvorrichtung zwischen zwei Betriebszuständen der Brennkraftmaschine. Es ist selbstverständlich, daß natürlich weitere Schaltstellungen der Verschlußklappe denkbar sind, beispielsweise, wenn die Verschlußelemente nur halb geschlossen sind, um einen kontinuierlichen Übergang des Betriebsverhaltens der Brennkraftmaschine von einem zum anderen Betriebszustand zu ermöglichen. Ähnliche Ergebnisse können dadurch erzielt werden, wenn man die Schaltgeschwindigkeit der Schalt- oder Verstelleinrichtung entsprechend variabel gestaltet, insbesondere in Abhängigkeit von den Betriebsbedingungen der Brennkraftmaschine.

Im folgenden sei die Erfindung anhand von drei Figuren näher erläutert.

Es zeigen
Figur 1 eine schematische Draufsicht auf eine erste Ausführungsform einer Luftansaugvorrichtung für eine Brennkraftmaschine nach der Erfindung; und
Figur 2 eine Querschnittsansicht entlang der Linie I-I von Figur 1;

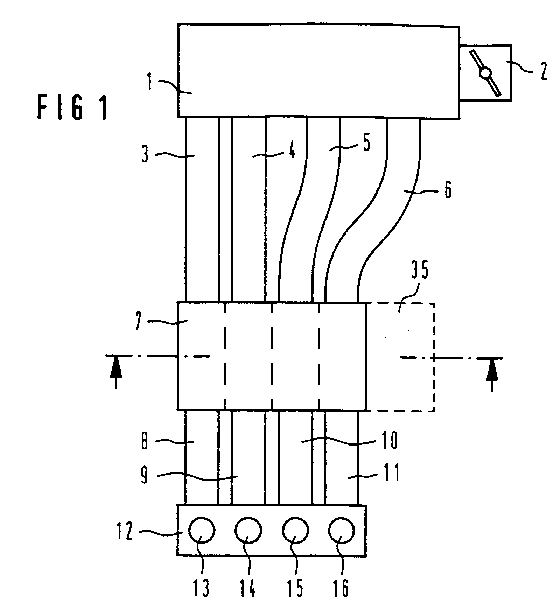

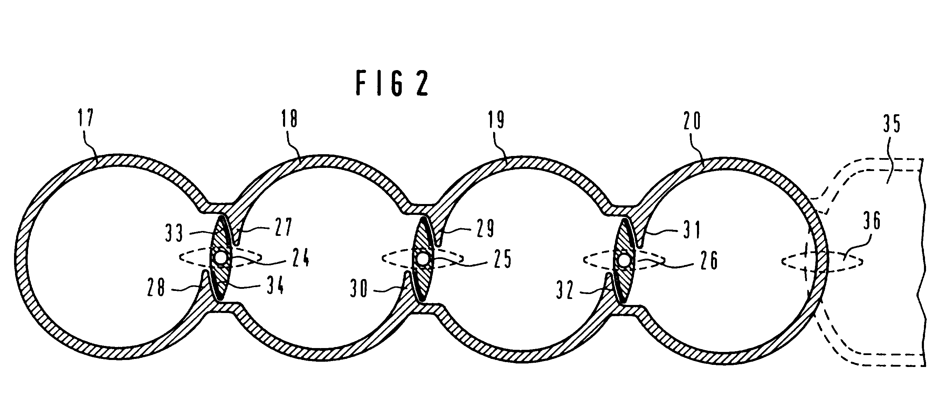

Die in den Figuren 1 und 2 gezeigte erste Ausführungsform einer Luftansaugvorrichtung besteht aus einem ersten Sammler 1, der mit einem Drosselklappenstutzen 2 in Verbindung steht. Mit diesem Sammler 1 stehen weitere Ansaugrohre 3,4,5,6 in Verbindung, die über einen Sammler 7 und weiteren Ansaugrohren 8,9,10,11 mit dem Zylinderkopf 12 einer nicht gezeigten Brennkraftmaschine in Verbindung stehen, deren einzelne Zylinder mit 13,14,15,16 angedeutet sind.

Wie besonders deutlich aus Figur 2 erkennbar ist, besteht der Sammler 7 aus einzelnen eng benachbarten Rohren 17,18,19,20, die im Bereich ihrer benachbarten Stellen zueinander weisende Öffnungen 21,22,23 aufweisen, die durch jeweils eine ovale, flügelförmige Klappe 24,25,26 verschließbar sind oder geöffnet (waagerechte Klappenstellung, gestrichelt angedeutet) werden können. Die Klappen können jedoch auch Zwischenstellungen einnehmen. Im Bereich einer jeden Öffnung 21,22,23 weisen die Rohre 17,18,19,20 jeweils zwei Anlagebunde 27,28; 29,30; 31,32 auf, an denen sich jeweils ein Flügel der Klappe anlegen kann, um die jeweilige Öffnung zu verschließen. Die Klappen sind im eng benachbarten Bereich der Rohre 17,18,19,20 jeweils durch Wellen 37,38,39 mittig gelagert, so daß die Flügel der Klappen im geöffneten Zustand der Öffnungen nur so gering wie möglich in das jeweilige Rohr hineinragen.

Im Bereich der Anlagebunde können die Klappen eine merkliche Rauhigkeit (angedeutet durch 33,34) aufweisen, um die Dichtigkeit an diesen Stellen zu erhöhen und um ein Festkleben der Klappen zu verhindern. Umgekehrt können jedoch auch die Anlagebunde in diesem Bereich eine Rauhigkeit aufweisen. Es ist auch denkbar, daß sowohl jeder Klappenflügel im Anlagebereich als auch der jeweilige Anlagebund eine gewisse Rauhigkeit aufweist.

Die Rohre des Sammlers 7 können separate Rohre sein, die mit den Rohren 3 bis 6 und 8 bis 11 der Ansaugvorrichtung verbunden, insbesondere verschweißt oder verklebt sein können.

Eine Variante des Sammlers 7 besteht darin, daß dieser um ein weiteres Volumen 35 (gestrichelt angedeutet) erweiterbar ist. Dies wird durch eine weitere Klappe 36 erzielt, die dieses weitere Volumen 35 mit den Volumina der Rohre des Sammlers 7 verbindet.

Die ersten Ansaugrohre 8,9,10,11 und die zweiten Ansaugrohre 17,18,19,20 können voneinander verschiedene Durchmesser aufweisen. Weiter können die Rohre eine geometrische Form aufweisen, die von einer runden Form abweicht.

## Patentansprüche

1. Variable Luftansaugvorrichtung für eine Brennkraftmaschine, mit:
einem ersten Sammler (1), der zur Zuführung von Ansaugluft über Luftansaugrohre (3 bis 6, 8 bis 11) mit einzelnen Zylindern (13 bis 16) der Brennkraftmaschine verbunden ist,
einem zweiten Sammler (7), der in einem Abschnitt zwischen dem ersten Sammler (1) und den Zylindern durch Luftansaugrohre gebildet ist, die in diesem Abschnitt eng aneinandergrenzen und die in ihrer Wandung einander zugewandte, aneinandergrenzende Öffnungen aufweisen, und
einer Verschlußeinrichtung, die mittels Verschlußelementen (24,25,26) die Öffnungen in Abhängigkeit eines Parameters der Brennkraftmaschine verschließt oder öffnet, **dadurch gekennzeichnet,**
- daß die Verschlußelemente (24,25,26) durch langgestreckte Körper gebildet sind, die jeweils in der Art einer Klappe auf einer Welle (37,38,39)) drehbar gelagert sind, und
- daß jedes Luftansaugrohr im Bereich des zweiten Sammlers im Bereich der langgestreckten Körper einen Anlagebund (27,28;29,30;31,32) aufweist.

2. Luftansaugvorrichtung nach Anspruch 1, **dadurch gekennzeichnet**, daß die Welle (37,38,39) jeweils im eng angrenzenden Bereich im Bereich der jeweiligen Öffnung der Luftansaugrohre angeordnet ist.

3. Luftansaugvorrichtung nach Anspruch 1, **dadurch gekennzeichnet,** daß der jeweils dem Anlagebund zugewandte Bereich des langgestreckten Körpers und/oder der Anlagebund in diesem Bereich eine vorgegebene merkliche Rauhigkeit (33,34) aufweist.

4. Luftansaugvorrichtung nach Anspruch 3, **dadurch gekennzeichnet,** daß die langgestreckten Körper durch ovale, zwei Flügel aufweisende Klappen gebildet sind.

5. Luftansaugvorrichtung nach Anspruch 1, **dadurch gekennzeichnet,** daß die Verstellgeschwindigkeit der Verschlußeinrichtung variabel ist.

## Claims

1. Variable air intake device for an internal combustion engine, with:
a first manifold (1) which is connected to individual cylinders (13 to 16) of the internal combustion engine for the supply of intake air via air intake pipes (3 to 6, 8 to 11),
a second manifold (7) which is formed in a portion between the first manifold (1) and the cylinders by air intake pipes which are closely adjacent to one another in this portion and which have, in their wall, mutually adjacent ports facing one another, and
a closing device which closes or opens the ports by means of closing elements (24,25,26) as a function of a parameter of the internal combustion engine,
characterized
- in that the closing elements (24,25,26) are formed by elongate bodies which are each rotatably mounted in the manner of a flap on a shaft (37,38,39), and
- in that each air intake pipe has a bearing collar (27,28;29,30;31,32) in the region of the second manifold in the region of the elongate bodies.

2. Air intake device according to Claim 1, characterized in that the shaft (37,38,39) is arranged in each case in the closely adjacent region in the region of the respective port of the air intake pipes.

3. Air intake device according to Claim 1, characterized in that that region of the elongate body which in each case faces the bearing collar and/or the bearing collar has in this region a predetermined appreciable roughness (33,34).

4. Air intake device according to Claim 3, characterized in that the elongate bodies are formed by oval flaps having two vanes.

5. Air intake device according to Claim 1, characterized in that the speed of adjustment of the closing device is variable.

## Revendications

1. Dispositif variable d'aspiration d'air pour un moteur à combustion interne, comportant:
un premier collecteur (1), qui, pour l'admission d'air d'aspiration, est relié aux différents cylindres (13 à 16) du moteur à combustion interne, par des tubes d'aspiration d'air (3 à 6, 8 à 11),
un deuxième collecteur (7) qui, dans une partie comprise entre le premier collecteur (1) et les cylindres, est formé par des tubes d'aspiration d'air qui, dans cette partie, sont étroitement adjacents les uns des autres et qui présentent, dans leur paroi, des orifices adjacents de communication, et
un dispositif de fermeture, qui, au moyen d'organes de fermeture (24, 25, 26), ferme ou ouvre les orifices en fonction d'un paramètre du moteur à combustion interne,
caractérisé en ce que
les organes de fermeture (24, 25, 26) sont formés par des corps allongés, qui sont, respectivement, à la façon d'un volet, montés tournant sur un arbre (37, 38, 39),
et en ce que chaque tube d'aspiration d'air présente, dans la zone du deuxième collecteur, dans la zone des corps allongés, un organe de butée (27, 28; 29, 30; 31, 32).

2. Dispositif d'aspiration d'air suivant la revendication 1, caractérisé en ce que chacun des arbres (37, 38, 39) est disposé dans la zone étroitement rapprochée, et dans la zone de chaque orifice concerné des tubes d'aspiration d'air.

3. Dispositif d'aspiration d'air suivant la revendication 1, caractérisé en ce que chacune des zones tournées vers l'organe de butée des corps allongés, et/ou chaque organe de butée, présente, dans cette zone, une rugosité particulière (33, 34) prédéfinie.

4. Dispositif d'aspiration d'air suivant la revendication 3, caractérisé en ce que les corps allongés sont formés par des volets ovales présentant deux ailerons.

5. Dispositif d'aspiration d'air suivant la revendication 1, caractérisé en ce que la vitesse de positionnement du dispositif de commutation est variable.
